# EUROPÄISCHE PATENTSCHRIFT

(11) **EP 1 514 416 B1**
(45) Veröffentlichungstag und Bekanntmachung des Hinweises auf die Patenterteilung: **20.04.2011**
(21) Anmeldenummer: 03760524.3
(22) Anmeldetag: 17.06.2003
(51) Int. Cl.: H04N 7/14

(54) **SYSTEM ZUR BIDIREKTIONALEN AUFNAHME UND WIEDERGABE VON BILD UND TON**
SYSTEM FOR BIDIRECTIONAL AUDIO AND VIDEO RECORDING AND REPRODUCTION
SYSTEME D'ENREGISTREMENT ET DE REPRODUCTION BIDIRECTIONNELS D'IMAGE ET DE SON

(30) Priorität: 20.06.2002 AT 9322002
(43) Veröffentlichungstag der Anmeldung: 16.03.2005
(73) Patentinhaber: TRAINT, Andreas, A-2842 Edlitz (AT)
(72) Erfinder: TRAINT, Andreas, A-2842 Edlitz (AT)
(74) Vertreter: Müllner, Martin
(86) Internationale Anmeldenummer: PCT/AT2003/000171
(87) Internationale Veröffentlichungsnummer: WO 2004/002151

(56) Entgegenhaltungen:
- WO-A-01/80550
- FR-A- 2 818 860
- US-A- 5 790 183

## Beschreibung

### TECHNISCHES GEBIET

Die Erfindung betrifft ein System zur bidirektionalen Aufnahme und Wiedergabe von Bild und Ton an mindestens zwei Standorten mit mindestens je einer Fernsehkamera und je einem Bildschirm, vorzugsweise einer durchscheinenden Projektionswand oder einer Bildwand mit Leuchtdioden od. dgl. als Bildpunkte.

### STAND DER TECHNIK

Seit der Erfindung des Fernsehens ist auch die Bildtelephonie bekannt. In einer Konferenzschaltung sehen einander die räumlich getrennten Gesprächspartner und können miteinander sprechen. Dazu ist nächst jeder Fernsehkamera ein Monitor als Wiedergabegerät vorgesehen, der das Bild der Fernsehkamera der entfernten Aufnahmestelle zeigt. Im Gespräch blickt jeder der Gesprächspartner auf den Bildschirm. Er wird aber von einer oberhalb, unterhalb oder seitlich neben dem Bildschirm angeordneten Kamera aufgenommen. Dadurch kommt es nicht zu einem Blickkontakt der Gesprächspartner. Die Übertragung führt zu lebensfremden Bildern.

Es sind Ausführungen bekannt bei welchen ein Bild von unten auf einen 45° pultartig geneigten Bildschirm projiziert wird. Die Kamera ist in Augenhöhe hinter dem Bildschirm vorgesehen. Es lässt sich dadurch eine ineinanderfließende Aufnahme und Wiedergabe realisieren, jedoch bedeutet die Schrägstellung der Platte als Bildschirm eine zusätzliche Distanz zu den Personen, die unerwünscht ist.

In der US 4 928 301 ist eine Station beschrieben, bei der Aufnahme und Projektion über bzw. durch einen Spiegel hindurch erfolgen. Unmittelbar vor dem Betrachter befindet sich ein Flüssigkristallschirm, der abwechselnd glasklar und trüb ist. Während der glasklaren Phase des Schirms blickt die Kamera für die Aufnahme durch diesen ungehindert hindurch. Im nächsten Augenblick wird ein Bild auf den trüb geschalteten Bildschirm projiziert usw. Der Bildschirm wechselt daher von translucent zu transparent - und dies nicht mechanisch sondern auf elektrischem Wege.

### OFFENBARUNG DER ERFINDUNG

Die Erfindung zielt darauf ab, eine unmittelbare Konfrontation von Personen mit Blickkontakt wirklichkeitsnah zu ermöglichen. Dies wird dadurch erreicht, dass der Bildschirm, vorzugsweise die Projektionswand mindestens einen Spalt als freien Durchblick für die Fernsehkamera aufweist, gegenüber dem das projizierte Bild ausgeblendet ist oder der frei von Leuchtdioden ist und dass der Spalt quer zu seiner Längsrichtung zur Aufnahme eines vollständigen Bildes im Rahmen des Erfassungswinkels der Fernsehkamera zusammen mit der Projektionswand bewegbar ist, wobei die Laufgeschwindigkeit des Spaltes über der Wahrnehmbarkeitsgrenze des menschlichen Auges liegt, während das projizierte oder wiedergegebene Bild auf der bewegten Projektionswand stationär bleibt. Während also das gesendete Bild der Gegenstation feststehend auf der umlaufend bewegten Leinwand bzw. Projektionsfläche aufscheint, läuft immer wieder ein schmaler projektionsfreier Spalt beim Betrachter vorbei, durch welchen eine Kamera (Fernsehkamera) den Betrachter abtastend umfasst und dieses Bild an die Gegenstation sendet. Damit fließen Wiedergabe und Aufnahme der beiden Stationen so ineinander, dass ein Flimmern infolge der Laufgeschwindigkeit des vorbeilaufenden Spalts oder einer Mehrzahl solcher Spalte nicht sichtbar ist. Die Kamera befindet sich in Augenhöhe. Damit entsteht ein realer Eindruck. Es ist bei beiden Stationen möglich, unmittelbar an den Bildschirm heranzutreten, ja sogar die Hand flach auf einen dem rotierenden Bildschirm umgebenden feststehenden durchsichtigen Mantel zu legen, sodass der Eindruck einer gegenseitigen Berührung entsteht.

Es ist zweckmäßig, wenn als Projektionswand eine Mantelfläche eines vertikalen Kreiszylinders vorgesehen ist, die in Abständen als Spalte glasklare Zonen oder Öffnungen längs jeweils einer Erzeugenden des Kreiszylinders aufweist, wenn Fernsehkameras für z.B. vier Quadranten feststehend im Inneren des Kreiszylinders angeordnet sind und wenn an die Spalte radiale lichtdichte Wände als gegenüber der Bildprojektion lichtdichte Aufnahmeschächte anschließen, die nächst der Optik der Fernsehkameras enden und die zusammen mit der Projektionswand umlaufend angetrieben sind. Die zylindrische Ausführung könnte etwa an öffentlichen Plätzen in Wien und München aufgestellt werden. Jede der beiden Stationen überträgt das Panoramabild der Gegenstelle und Menschen können aufeinander zugehen und mit Blickkontakt über eingebaute Mikrophone und Lautsprecher miteinander in Kontakt treten. Es sind Durchmesser der Bildschirme von 3 bis 6 Metern, allenfalls 8 Metern, zweckmäßig. Natürlich umschließt ein feststehender Zylinder aus glasklaren Material den rotierenden Bildschirm. Wenn die Fernsehkameras von einem mit der Projektionswand mitdrehenden im Wesentlichen lichtdichten Kasten umschlossen sind, an den in radialer Richtung die Aufnahmeschächte als einzige Lichteintrittsbereiche anschließen, dann ergibt sich eine vollständige optische Trennung von Aufnahme und Projektion im Inneren der Station ohne gegenseitige Lichteinwirkungen. Somit liegt eine Zeitmultiplexanordnung von Bildwiedergabe und darauffolgender Aufnahme in einem gemeinsamen Blickfeld vor.

Eine andere Ausführungsform ist dadurch gekennzeichnet, dass die Projektionswand als ein über Umlenkungen wie Umlenkrollen laufendes durchscheinendes flexibles Band ausgebildet ist, das quer zur Laufrichtung Spalte oder Schlitze für den freien Durchblick der Fernsehkamera aufweist und dass unmittelbar nächst der Fernsehkamera eine synchron umlaufende Blende vorgesehen ist, die die Projektionsfläche des Projektors für die Aufnahme der Fernsehkamera abdeckt. Auf diese Weise können auch gerade Bildflächen wie etwa flache Bilder, z.B. flache Panoramabilder, die der Länge nach unbegrenzt sein können, erzielt werden. Ferner ist es möglich, die Bilder von außen auf eine kreiszylindrische transparente Wand zu projizieren, wobei die Wand bewegt wird und Spalte für die ebenfalls außen angeordneten Fernsehkameras aufweist. Der Betrachter steht dann im Inneren des Kreiszylinders und hat den Eindruck, als wäre er in einer anderen Stadt, zumal er mit den in der Projektion vorbeigehenden Menschen in Blickkontakt treten und mit diesen sprechen kann.

Als Bildschirm kann auch jede Ausführungsform gemäß der EP 0 704 135 B1 sowie der EP 0 454 244 B1 eingesetzt werden. Infolge einer Rundkonstruktion gemäß dem Ausführungsbeispiel ist die Bildschärfe bei Projektion besonders gut (gleiche Schärfe über das gesamte Bild).

### KURZE BESCHREIBUNG DER ZEICHNUNGEN

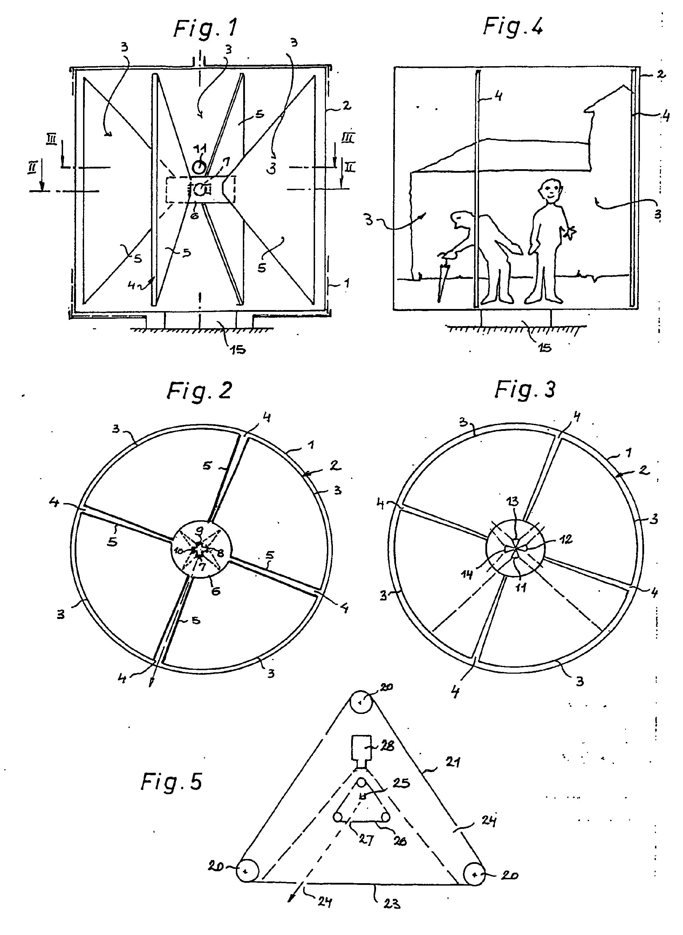

Ausführungsbeispiele zum Erfindungsgegenstand sind in den Zeichnungen schematisch dargestellt. Fig. 1 zeigt einen Einblick in das Innere eines erfindungsgemäßen Systems, Fig. 2 einen Schnitt nach der Linie II-II in Fig. 1, Fig. 3 einen Schnitt nach der Linie III-III in Fig. 1, Fig. 4 eine "Momentaufnahme" des Systems in Betrieb mit einer Projektion von einem ebensolchen entfernt angeordneten System und Fig. 5 das Grundprinzip einer anderen von der Kreiszylinderform abweichenden Ausführung.

Die Zeichnungen illustrieren das Grundprinzip eines Systems, das als Aufnahme und Wiedergabestation mit Fernsehkameras und Bildschirmprojektion mit mindestens einem zweiten ebensolchen System oder Station über Leitung, terrestrischen Funk oder Satelliten in Verbindung steht. Fernsehkameras und Sender zweier Stationen übertragen das Bild z.B. der unmittelbaren Umgebung an die jeweilige Gegenstation zur Wiedergabe. Auch der Ton wird gleichzeitig in beide Richtungen übertragen. Damit sehen einander in der Art eines Bildtelefons eventuelle Gesprächspartner bzw. Passanten können bei öffentlicher Aufstellung des Systems bzw. Stationen an verschiedenen Orten trotz räumlicher Trennung mit Passanten des anderen Aufstellungsortes kommunizieren, sofern sie dies wünschen. Neben einer Wiedergabe in Lebensgröße ist die lebensnahe Aufgabe und Wiedergabe erwünscht, mit dem Ziel, unmittelbaren Blickkontakt der Personen an den verschiedenen Aufstellungsorten herstellen zu können.

### BESTE AUSFÜHRUNGSFORM DER ERFINDUNG

Dazu ist innerhalb eines glasklaren feststehenden Kunststoffzylinders 1 ein zweiter rotierend antreibbarer Kreiszylinder 2 vorgesehen, dessen Mantelfläche in Abschnitten als eine durchscheinende Projektionswand 3 ausgebildet ist (Fig. 2, 3). Längs mehrerer Erzeugender des Kreiszylindermantels 2 sind Spalte 4 vorgesehen, die nicht bloß durchscheinend, sondern glasklar sind. An die Spalte 4, von welchem hier vier dargestellt sind, deren Anzahl jedoch höher sein kann (z.B. 32), schließen radial nach innen gerichtete Aufnahmeschächte 5 an. Diese in Fig. 1 bis 3 vier Aufnahmeschächte 5 drehen sich mit dem Kreiszylinder 2 mit. Die Aufnahmeschächte 5 münden in einen zentralen mitdrehenden Kasten 6, in welchem vier Fernsehkameras 7, 8, 9, 10 feststehend angeordnet sind. Die Kamera 7 hat einen Blickwinkel bzw. ein Aufnahmeobjektiv von 90° (als Beispiel für das Verständnis der Erfindung), erfasst jedoch nur jeweils den Bildausschnitt, welcher im Durchblick durch den Aufnahmeschacht 5 erkennbar ist. Der Kasten 6 sowie jeder Aufnahmeschacht 5 ist mit Ausnahme des vorgenannten radialen Durchblicks nach oben bzw. zu den Seiten hin lichtdicht verschlossen. Die gesamte vorgenannte Baugruppe dreht sich, während die Kameras 7, 8, 9, 10 feststehen. Daher tastet die Kamera 7 infolge der Winkelbewegung des Spaltes 5 innerhalb des Kamerawinkels von 90° und innerhalb einer kurzen Zeitspanne entsprechend der Umdrehungszahl des Keiszylinders 2 ein Bild ab und sendet dieses an einen Empfänger mit Projektor, eines gleich aufgebauten Systems einer Gegenstation, wobei der Projektor dort exakt einen Projektor 11 in Fig. 3 entspricht. Der Projektor 11 erhält also ein durch Spaltabtastung entstandenes Bild einer Kamera der Gegenstation, die sinngemäß mit der Kamera 7 der Fig. 2 übereinstimmt.

In Fig. 3 projiziert der Projektor 11 in einem Winkel von 90°, sodass mit den Projektoren 11 und 12, 13, 14 ein 360°-Panoramabild entsteht, das von der Gegenstation aufgenommen, gesendet und hier empfangen wurde. Die Projektoren 11 bis 14 stehen ebenso fest wie die unmittelbar benachbarten Kameras 7 bis 10. Auf der umlaufenden Projektionswand 3 ist die Projektion ortsfest sichtbar. Die Umdrehungszahl sowie die Breite der Spalte 4 und das Verhältnis von Spaltfläche zu Projektionsfläche ist derart gewählt, dass das Vorbeilaufen des Spaltes 4 (auch wenn es mehr als vier Spalte wie z.B. 32 Spalte sind) nicht wahrnehmbar ist.

In Fig. 4 ist gewissermaßen eine Momentaufnahme während des Betriebes dargestellt, bei der der Spalt 4 sichtbar ist, durch welchen die Kamera 7 durchblickt und einen schnellen Streifen der Umgebung aufnimmt. Bei Drehung des Kreiszylinders 2 ändert sich am sichtbaren Ergebnis des projizierten Bildes nichts. Die vorbeilaufenden Spalte 5 liegen drehzahlabhängig über der Wahrnehmungsgrenze des menschlichen Auges. Die Kameras 7, 8, 9, 10 bauen in der Zeiteinheit vollständig Bilder auf, die sie an die Projektoren der Gegenstation senden und umgekehrt.

Im Sockel des Systems bzw. Station ist in Fig. 1 und 4 noch ein Motor 15 dargestellt, der den Kreiszylinder 2 mit am Umfang abwechselnden Projektionswänden 3 und Spalten 4 rotierend antreibt. Die Geschwindigkeit kann so weit hochgefahren werden, bis die Spalte 4 optisch verschwinden.

In Fig. 5 ist als Alternative zum Kreiszylinder 2 ein um Umlenkrollen 20 laufendes flexibles Band 21 vorgesehen, das in Abständen zwischen durchscheinenden Bereichen als Projektionswand 23 wiederkehrende vollkommen glasklar durchsichtige Zonen als Spalte 24 aufweist. Im Inneren ist eine Fernsehkamera 25 hinter einer synchron mit dem Band 21 umlaufenden Blende 26 vorgesehen. Spalt 24 und Blendenöffnung 27 fluchten und decken für die Optik der Kamera 25 das Projektionsbild eines Projektors 28 auf dem Band 21 ab. Die Fernsehkamera 25 ist nach oben und unten gegen Streulicht der Projektion abgedeckt.

Die Ausführung nach Fig. 5 liefert ein begrenztes Flächenbild im Gegensatz zum 360°-Panoramabild der Fig. 1 bis 4. Gerade Flächen bis leicht gewölbte oder beliebige Kurven folgende Bildwände können der Länge nach an sich und ohne Zwischenräume als ein großer Bildschirm aufgebaut werden.

An Stelle einer Projektion können auch umlaufende Displays auf Dioden- oder Flüssigkristallbasis mit entsprechender Multiplexsoftware eingesetzt werden, welche die Bildinformation von den Kameras der Gegenstation unmittelbar erhalten.

Die Anordnung der Optiken der Kameras 7 bis 10 ist etwa in Augenhöhe der abgebildeten Personen, damit sich keine Verzerrungen ergeben und ein realistischer Eindruck einer realen Begegnung auch bei diesem virtuellen System entsteht. Das System umfasst Konstruktionsbauweisen von Bildmonitor, Videokonferenzanlagen bis hin zu Großbildprojektionen.

## Patentansprüche

1. System zur bidirektionalen Aufnahme und Wiedergabe von Bild und Ton an mindestens zwei Standorten mit mindestens je einer Fernsehkamera und je einem Bildschirm, vorzugsweise einer durchscheinenden Projektionswand oder einer Bildwand mit Leuchtdioden oder dergleichen als Bildpunkte, **dadurch gekennzeichnet, dass** der Bildschirm, vorzugsweise die Projektionswand (3) mindestens einen Spalt als freien Durchblick für die Fernsehkamera (7, 8, 9, 10; 25) aufweist, gegenüber dem das projizierte Bild ausgeblendet ist oder der frei von Leuchtdioden oder dergleichen ist und dass der Spalt (4, 24) quer zu seiner Längsrichtung zur Aufnahme eines vollständigen Bildes im Rahmen des Erfassungswinkels der Fernsehkamera (7, 8, 9, 10; 25) zusammen mit dem Bildschirmbewegbar ist, wobei die Laufgeschwindigkeit des Spaltes (4, 24) über der Wahrnehmbarkeitsgrenze des menschlichen Auges liegt, während das projizierte oder wiedergegebene Bild auf dem be-wegten Bildschism stationär bleibt.

2. System nach Anspruch 1, **dadurch gekennzeichnet, dass** als Bildschism eine Mantelfläche eines vertikalen Kreiszylinders (2) vorgesehen ist, die in Abständen als Spalte (4) glasklare Zonen oder Öffnungen längs jeweils einer Erzeugenden des Kreiszylinders (2) aufweist, dass Fernsehkameras (7, 8, 9, 10) feststehend im Inneren des Kreiszylinders (2) angeordnet sind und dass an die Spalte (4) radiale lichtdichte Wände als gegenüber der Bildprojektion lichtdichte Aufnahmeschächte (5) anschließen, die nächst der Optik der Fernsehkameras (7, 8, 9, 10) enden und die zusammen mit der Projektionswand (3) umlaufend angetrieben sind.

3. System nach Anspruch 2, **dadurch gekennzeichnet, dass** die Fernsehkameras (7, 8, 9, 10) von einem mit dem Bildschism mitdrehenden im Wesentlichen lichtdichten Kasten (6) umschlossen sind, an den in radialer Richtung die Aufnahmeschächte (5) als einzige Lichteintrittsbereiche anschließen.

4. System nach Anspruch 1, **dadurch gekennzeichnet, dass** der Bildschism als ein über Umlenkungen wie Umlenkrollen (20) laufendes durchscheinendes flexibles Band (21) ausgebildet ist, das quer zur Laufrichtung Spalte (24) oder Schlitze für den freien Durchblick der Fernsehkamera (25) aufweist und dass unmittelbar nächst der Fernsehkamera (25) eine synchron umlaufende Blende (26) vorgesehen ist, die die Projektionsfläche (23) des Projektors (28) für die Aufnahme der Fernsehkamera (25) abdeckt.

## Claims

1. A system for the bidirectional acquisition and reproduction of images and sound at at least two locations, each of which has at least one television camera and at least one display screen, preferably a light-transmissive projection wall or an image display with light-emitting diodes or the like as image points, **characterized in that** the image screen, preferably the projection wall (3) has at least one gap as a free viewing path for the television camera (7, 8, 9, 10; 25), with respect to which the projected image is shielded out or which is free from light-emitting diodes or the like, and **in that** the gap (4, 24) is movable transversely to its longitudinal direction to pick up a complete image within the framework of the reception angle of the television cameras (7, 8, 9, 10; 25) together with the display screen whereby the travel speed of the gap (4,24) is above the detection limit of the human eye while the projected or reproduced image on the movable display screen remains stationary.

2. The system according to claim 1, **characterized in that** as the display screen the surface of an optical circular cylinder (2) is provided which has glass clear zones or openings along respective generatrices of the circular cylinder (2) in spaced relationship as gaps (4), **in that** television cameras (7, 8, 9, 10) are arranged stationarily in the interior of the circular cylinder (2) and **in that** the gap (4) is delimited by radial light-tight walls defining pickup shafts (5) light-tight to image projection which end adjacent the optics for the television cameras (7, 8, 9, 10) and are driven together with the projection wall (3) in a circular path.

3. The system according to claim 2, **characterized in that** the television cameras (7, 8, 9, 10) are surrounded by a light-tight casing (6) rotating with the display screen to which the pickup shafts (5) extending in the radial direction are connected as the sole light-admission region.

4. The system according to claim 1, **characterized in that** as the display screen is formed as a flexible light-transmissive belt travelling around rerouting rollers such as the rerouting rollers (20) are and provided with gaps (24) or slits transverse to the travel direction through which the television camera (25) can take a picture freely and **in that** directly adjacent the television camera (25) a synchronously travelling shutter (26) is provided which shields the projection surface (23) of the projector (28) for image acquisition by the camera (25).

## Revendications

1. Système permettant d'enregistrer et de diffuser l'image et le son de façon bidirectionnelle à au moins deux endroits différents qui sont chacun pourvus d'une caméra de télévision ainsi que d'un écran, préférentiellement d'une paroi de projection translucide ou d'un écran mural dont les pixels sont représentés par des diodes électroluminescentes ou d'autres éléments apparentés, **caractérisé en ce que** ledit écran, s'agissant préférentiellement d'une paroi de projection (3), présente au moins une fente permettant à la caméra de télévision (7, 8, 9, 10; 25) une prise de vue dégagée, face à laquelle la projection de l'image est interrompue ou qui est dépourvue de diodes électroluminescentes ou d'autres éléments apparentés et que ladite fente (4, 24) peut être déplacée, ensemble avec ledit écran, transversalement par rapport à sa dimension longitudinale afin de réaliser l'enregistrement d'une image complète au sein du cadre de l'angle de prise de vue de la caméra de télévision (7, 8, 9, 10; 25), la vitesse de déplacement de la fente (4, 24) étant supérieure à la limite de perception de l'oei-1 humain, alors que l'image projetée ou diffusée sur l'écran en mouvement reste stationnaire.

2. Système selon la revendication 1, **caractérisé en ce que** l'on prévoit, en tant qu'écran, une aire latérale d'un cylindre de révolution vertical (2) qui présente, en tant que fentes (4) des zones ou ouvertures, espacées dont chacune est disposée le long d'une génératrice du cylindre de révolution (2), que les caméras de télévision (7, 8, 9, 10) sont disposés de façon immobile à l'intérieur du cylindre de révolution (2) et que les fentes (4) se poursuivent par des parois radiales opaques forment des couloirs d'enregistrement (5) opaques vis-à-vis de l'image projetée, lesquels se terminent à proximité de l'optique des caméras de télévision (7, 8, 9, 10) et sont entrainés, ensemble avec la paroi de projection (3), dans un mouvement rotatif.

3. Système selon la revendication 2, **caractérisé en ce que** les caméras de télévision (7, 8, 9, 10) sont entourés d'un boîtier essentiellement opaque (6) qui suit la rotation dudit écran et qui se poursuit dans le sens radial par les couloirs d'enregistrement (5) qui constituent alors les seules zones d'incidence de lumière.

4. Système selon la revendication 1, **caractérisé en ce que** ledit écran est formé par un ruban flexible translucide (21) se déplaçant à travers des dispositifs de renvoi comme des poulies de renvoi (20) et présentant, transversalement au sens du déplacement, des fentes (24) ou orifices filiformes permettant à la caméra de télévision (25) une prise de vue dégagée et qu'un obturateur à rotation synchronisée (26) est prévu à proximité immédiate de la caméra de télévision (25) lequel recouvre la surface de projection (23) du projecteur (28) en vue de l'enregistrement par la caméra de télévision (25).
